# FASCICULE DE BREVET EUROPEEN

(11) **EP 3 669 065 B1**
(45) Date de publication et mention de la délivrance du brevet: **07.04.2021**
(21) Numéro de dépôt: 18793246.2
(22) Date de dépôt: 28.09.2018
(51) Int. Cl.: F02M 35/10

(54) **ENSEMBLE D'ADMISSION D'AIR**
LUFTEINLASSANORDNUNG
AIR INTAKE ASSEMBLY

(30) Priorité: 09.10.2017 FR 1759414
(43) Date de publication de la demande: 24.06.2020
(73) Titulaire: NOVARES France, 92140 Clamart (FR)
(72) Inventeur: DEMANGEOT, Jérôme, 62350 Calonne Sur La Lys (FR); FACQ, Gregory, 59750 Feignies (FR)
(74) Mandataire: Delorme, Nicolas
(86) Numéro de dépôt international: PCT/FR2018/052401
(87) Numéro de publication internationale: WO 2019/073142

(56) Documents cités:
- EP-A1- 0 764 819
- EP-A1- 0 877 161
- EP-A2- 1 418 334
- WO-A1-98/10187
- US-A1- 2004 255 911

## Description

La présente invention concerne un ensemble d'admission d'air pour un moteur automobile.

Les moteurs à combustion interne fonctionnent sur le principe de la combustion d'air et de carburant.

Dans le cas des véhicules automobiles, l'air provient d'une ligne d'admission d'air qui capte l'air à l'extérieur du véhicule et le filtre avant qu'il ne soit admis dans le moteur.

D'une manière courante, les véhicules automobiles comprennent un débitmètre positionné dans un tuyau de la ligne d'admission d'air, voir par exemple le document US 2004/255911 A1. Le débitmètre est un instrument de mesure permettant de mesurer le débit d'air entrant dans le moteur. Cette mesure permet notamment de contrôler le rapport stœchiométrique entre l'air et le combustible dans le moteur. De plus, le débitmètre permet aussi de contrôler le taux de recyclage des gaz d'échappement qui sont réinjectés dans le moteur. Par extension, les mesures du débitmètre sont utilisées pour les homologations aux normes en pollution des véhicules.

Le débitmètre est donc un élément essentiel dont les mesures doivent être les plus précises possible.

Or, pour de faibles débits, le flux d'air est trop diffus pour que le débitmètre puisse en mesurer précisément le débit.

Dans ce contexte, la présente invention a pour objectif de fournir un ensemble d'admission d'air pour un moteur automobile qui permette de mesurer précisément le débit du flux d'air sur l'ensemble de la plage de débits d'air du fonctionnement du moteur.

Selon une définition générale, l'invention concerne un ensemble d'admission d'air pour un moteur automobile, comprenant un tuyau d'admission d'air, un débitmètre et un dispositif d'orientation du flux d'air positionné en amont du débitmètre par rapport au sens de circulation du flux d'air dans le tuyau. Le dispositif d'orientation d'un flux d'air est adapté pour guider le flux d'air vers le débitmètre et présente une perméabilité variable pour régler la vitesse du flux d'air.

D'une manière particulièrement avantageuse, le dispositif d'orientation permet de concentrer le flux d'air vers le débitmètre lorsque le flux d'air s'écoule avec un faible débit. Ainsi, quel que soit le débit, le flux d'air s'écoule vers le débitmètre, pour permettre une mesure précise du débit d'air par le débitmètre.

L'invention propose donc un ensemble d'admission d'air pour un moteur automobile qui permet de mesurer précisément le débit du flux d'air sur l'ensemble de la plage de débits d'air du fonctionnement du moteur.

Le dispositif d'orientation peut présenter une forme conique avec une ouverture amont et une ouverture aval, pour focaliser le flux d'air sur le débitmètre.

Selon un premier mode de réalisation, le dispositif d'orientation présente un corps conique comprenant une pluralité de déflecteurs élastiquement mobiles par rapport au corps conique. Les déflecteurs sont adaptés pour être déplacés sous la pression du flux d'air, pour faire varier la perméabilité du dispositif d'orientation.

Selon ce premier mode de réalisation, le corps conique peut présenter des fentes séparant chaque déflecteur. Les fentes permettent le déplacement de chaque déflecteur et permettent une variation de perméabilité du dispositif d'orientation.

Selon un deuxième mode de réalisation, le dispositif d'orientation comprend un corps conique présentant une pluralité d'ouvertures présentant des formes et des surfaces différentes.

Selon ce deuxième mode de réalisation, le corps conique peut présenter une première série d'ouvertures, positionnées dans une région amont et une deuxième série d'ouvertures positionnées dans une région aval. Les ouvertures de la deuxième série peuvent présenter chacune une surface supérieure à la surface de chaque ouverture de la première série.

Selon un troisième mode de réalisation, le dispositif d'orientation peut comprendre un diaphragme de forme conique adapté pour faire varier l'ouverture aval.

La présente invention porte aussi sur un procédé de mesure du débit d'un flux d'air circulant dans un ensemble d'admission d'air selon l'invention. Le procédé comprend les étapes de :
- (a) circulation d'un flux d'air présentant un débit dans le tuyau ;
- (b) variation de la perméabilité du dispositif d'orientation en fonction du débit du flux d'air (I) circulant dans le tuyau, pour régler la vitesse du flux d'air et orienter le flux d'air vers le débitmètre ;
- (c) mesure du débit par le débitmètre.

L'étape (b) peut comprendre une phase de maintien d'une perméabilité minimale, ou de réduction de la perméabilité, pour un débit, dit faible débit, compris entre 1g/s et 10g/s, pour concentrer le flux d'air vers le débitmètre et augmenter la vitesse du flux d'air.

L'étape (b) peut comprendre une phase d'augmentation de la perméabilité pour un débit, dit haut débit, compris entre 30g/s et 250g/s, pour diminuer les pertes de charges.

D'autres caractéristiques et avantages de la présente invention ressortiront clairement de la description détaillée ci-après de trois modes de réalisation de l'invention, donnés à titre d'exemples non limitatifs, en référence aux dessins annexés dans lesquels :
- La figure 1 est une vue en perspective d'un ensemble d'admission d'air selon un premier mode de réalisation de l'invention ;
- La figure 2 est une vue en coupe de coté d'un ensemble d'admission d'air selon un premier mode de réalisation de l'invention ;
- La figure 3 est une vue de face d'un ensemble d'admission d'air selon un premier mode de réalisation de l'invention ;
- La figure 4 est une vue en perspective d'un ensemble d'admission d'air selon un deuxième mode de réalisation de l'invention ;
- La figure 5 est une vue en coupe de coté d'un ensemble d'admission d'air selon un deuxième mode de réalisation de l'invention ;
- La figure 6 est une vue de face d'un ensemble d'admission d'air selon un deuxième mode de réalisation de l'invention ;
- La figure 7 est une vue en perspective d'un ensemble d'admission d'air selon un troisième mode de réalisation de l'invention ;
- La figure 8 est une vue en coupe de coté d'un ensemble d'admission d'air selon un troisième mode de réalisation de l'invention ;
- La figure 9 est une vue de face d'un ensemble d'admission d'air selon un troisième mode de réalisation de l'invention ;

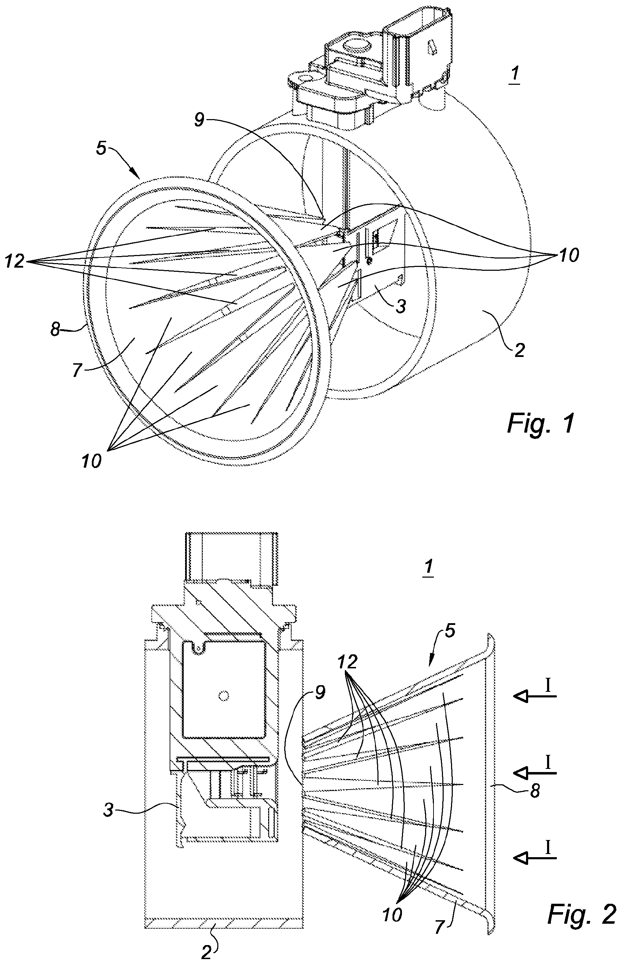

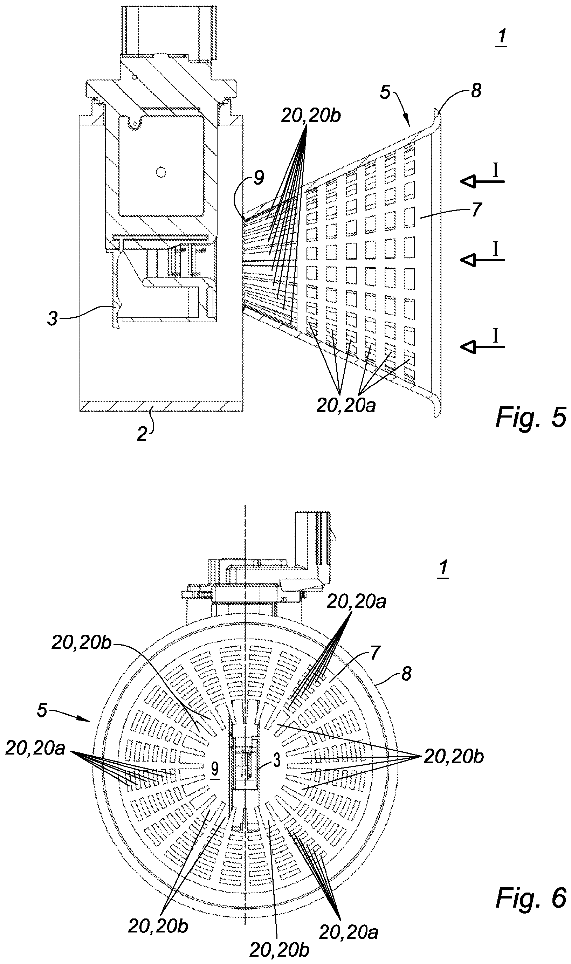

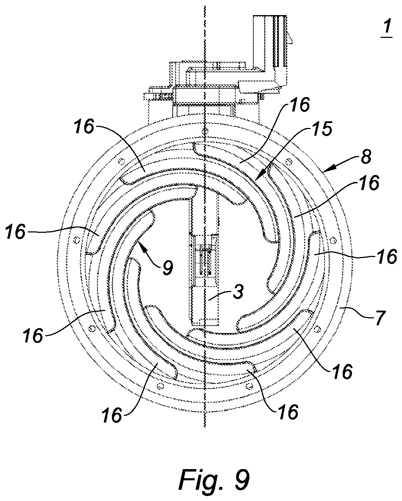

En référence aux figures 1 à 9, l'invention concerne un ensemble d'admission d'air 1 pour un moteur automobile. L'ensemble d'admission d'air 1 comprend un tuyau 2 d'admission d'air, un débitmètre 3 et un dispositif d'orientation 5 d'un flux d'air l positionné en amont du débitmètre 3 par rapport au sens de circulation du flux d'air l dans le tuyau 2. Le dispositif d'orientation 5 peut, par exemple, être fabriqué en matériau plastique.

Selon un premier mode de réalisation présenté aux figures 1 à 3, le dispositif d'orientation 5 présente un corps conique 7 avec une ouverture amont 8 et une ouverture aval 9. De plus, le corps conique 7 présente une pluralité de déflecteurs 10 élastiquement mobiles par rapport au corps conique 7. Selon l'exemple ici présenté, les déflecteurs 10 sont séparés par des fentes 12. De plus, selon l'exemple ici présenté, les déflecteurs 10 sont venus de moulage avec le corps conique 7.

Les déflecteurs 10 peuvent occuper une multitude de positions entre une première et une deuxième position extrême. Le mouvement des déflecteurs 10 permet de faire varier l'ouverture aval 9 du corps conique 7. En effet, la section de l'ouverture aval 9 évolue entre un minimum lorsque les déflecteurs 10 sont dans la première position extrême et un maximum lorsque les déflecteurs 10 sont dans la deuxième position extrême. La fonction de l'ouverture aval 9 sera détaillée ci-après. Selon l'exemple ici présenté, en l'absence d'un débit d'air suffisant, l'élasticité de la liaison entre les déflecteurs 10 et le corps conique 7 maintient les déflecteurs 10 dans la première position extrême.

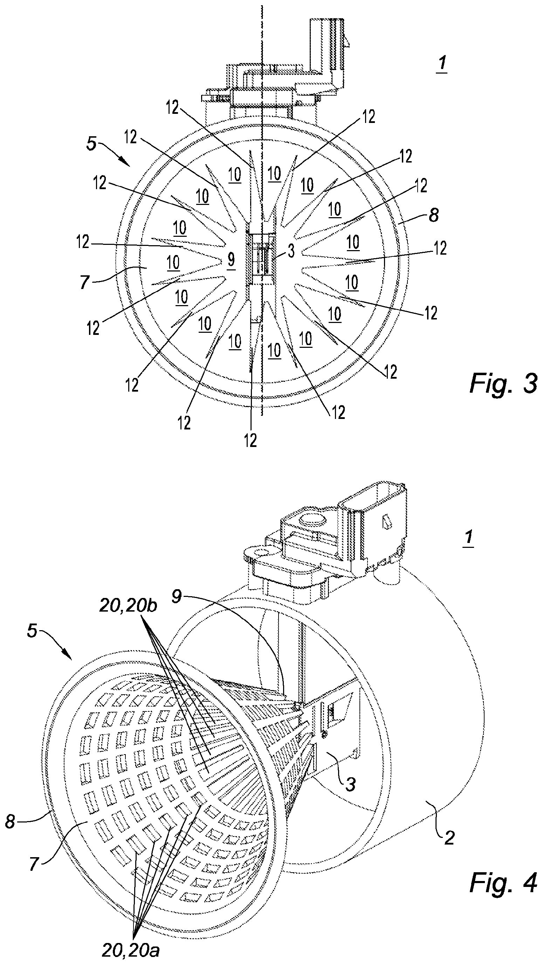

Selon un deuxième mode de réalisation représenté aux figures 4 à 6, le dispositif d'orientation 5 comprend un corps conique 7. Le corps conique 7 présente une pluralité d'ouvertures 20. Les ouvertures 20 présentent des géométries et des surfaces différentes. Selon l'exemple ici présenté, le corps conique 7 présente une première série d'ouvertures 20a, positionnées dans une région amont et une deuxième série d'ouvertures 20b positionnées dans une région aval à proximité de l'ouverture aval 9. Les ouvertures 20b de la deuxième série couvrent chacune une surface plus importante que les ouvertures 20a de la première série. Tel que cela sera détaillé ci-après, la différence de surface entre les ouvertures 20a de la première série et les ouvertures 20b de la deuxième série, permet au dispositif de guidage 5 selon le deuxième mode de réalisation de présenter une perméabilité variable.

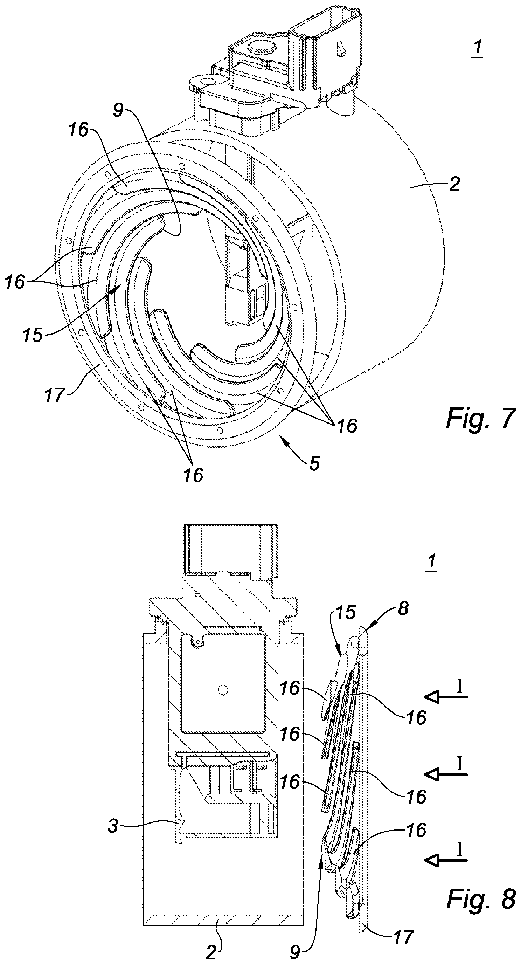

Selon un troisième mode de réalisation présenté aux figures 7 à 9, les moyens de guidage le dispositif d'orientation 5 comprend un diaphragme 15. Le diaphragme est formé d'une série de lamelles 16 retenues dans une bague 17. Les lamelles 16 sont sollicitées élastiquement vers une position en d'ouverture minimale du diaphragme 15, et celles-ci s'écartent pour ouvrir le diaphragme 15 sous la poussée du flux d'air l Le diaphragme 15 présente une géométrie sensiblement conique. Le diaphragme 15 présente une ouverture aval 9 dont la section varie entre un maximum lorsque le diaphragme 15 est en position d'ouverture maximale et un minimum lorsque le diaphragme 15 est en position d'ouverture minimale.

Quel que soit le mode de réalisation, au niveau de l'ouverture amont 8, la dispositif d'orientation 5 peut présenter un diamètre équivalent au diamètre du tuyau 2, pour être monté ajusté dans le tuyau 2. Cette disposition technique permet de garantir que l'ensemble du flux d'air l traverse le dispositif d'orientation 5.

L'invention concerne également un procédé de mesure du débit d'un flux d'air 1 circulant dans un ensemble d'admission d'air 1

Le procédé comprend essentiellement les étapes suivantes :
- (a) circulation d'un flux d'air présentant un débit dans le tuyau ;
- (b) variation de la perméabilité du dispositif d'orientation en fonction du débit du flux d'air (l) circulant dans le tuyau, pour régler la vitesse du flux d'air et orienter le flux d'air vers le débitmètre ;
- (c) mesure du débit par le débitmètre.

L'étape (b) peut comprendre une phase de maintien d'une perméabilité minimale, ou de réduction de la perméabilité, pour un débit, dit faible débit, compris entre 1g/s et 10g/s, pour concentrer le flux vers le débitmètre et augmenter la vitesse du flux d'air.

L'étape (b) peut comprendre une phase d'augmentation de la perméabilité pour un débit, dit haut débit, compris entre 30g/s et 250g/s, pour diminuer les pertes de charges.

Lorsque le flux d'air l présente un faible débit, selon le premier mode de réalisation de l'invention, les déflecteurs 10 réduisent l'ouverture aval 9 pour concentrer le flux d'air l sur le débitmètre 3 et en augmenter la vitesse. Cette disposition technique permet au débitmètre 3 d'effectuer une mesure précise du débit du flux d'air 1, lorsque celui-ci s'écoule avec un faible débit.

Selon le deuxième mode de réalisation, lorsque le flux d'air l présente un faible débit, le flux d'air l s'écoule principalement par l'ouverture aval 9 et par les ouvertures 20b de la deuxième série d'ouvertures 20. Ainsi, le flux d'air l est focaliser sur le débitmètre 3 et n'est pas ralenti.

Selon le troisième mode de réalisation, lorsque le flux d'air l présente un faible débit, le diaphragme 15 réduit l'ouverture aval 9 pour concentrer le flux d'air l sur le débitmètre 3 et en augmenter la vitesse. Cette disposition technique permet au débitmètre 3 d'effectuer une mesure précise du débit du flux d'air 1, lorsque celui-ci s'écoule avec un faible débit.

Lorsque le flux d'air l présente un haut débit, selon le premier mode de réalisation de l'invention, la pression du flux d'air écarte les déflecteurs 10 qui ouvrent au maximum l'ouverture aval 9, pour permettre un écoulement fluide du flux d'air l en diminuant les pertes de charge.

Selon le deuxième mode de réalisation, lorsque le flux d'air l présente un haut débit, le flux d'air l traverse l'ensemble des ouvertures 20 et l'ouverture aval 9. Ainsi le flux d'air l n'est pas ralenti, ce qui permet de diminuer les pertes de charge.

Selon le troisième mode de réalisation, lorsque le flux d'air l présente un haut débit, la pression du flux d'air l sur le diaphragme 15 ouvre au maximum l'ouverture aval 9, pour permettre un écoulement fluide du flux d'air l en diminuant les pertes de charge.

Ainsi l'invention fournit un ensemble d'admission d'air pour un moteur automobile qui permet de mesurer précisément le débit du flux d'air sur l'ensemble de la plage de débits d'air du fonctionnement du moteur.

Bien entendu, l'invention ne se limite pas aux seules formes d'exécution représentées ci-dessus, mais elle embrasse au contraire toutes les formes de réalisation.

## Revendications

1. Ensemble d'admission d'air (1) pour un moteur automobile, comprenant un tuyau (2) d'admission d'air, un débitmètre (3) et un dispositif d'orientation (5) d'un flux d'air positionné en amont du débitmètre (3) par rapport au sens de circulation du flux d'air (l) dans le tuyau (2), le dispositif d'orientation (5) du flux d'air (l) étant adapté pour guider le flux d'air (l) vers le débitmètre (3), **caractérisé en ce que** le dispositif d'orientation (5) du flux d'air (l) présentant une perméabilité variable pour régler la vitesse du flux d'air (l).

2. Ensemble d'admission d'air (1) selon la revendication 1, **caractérisé en ce que** le dispositif d'orientation (5) présente une forme conique avec une ouverture amont (8) et une ouverture aval (9), pour focaliser le flux d'air (l) sur le débitmètre (3).

3. Ensemble d'admission d'air (1) selon la revendication 2, **caractérisé en ce que** le dispositif d'orientation (5) présente un corps conique (7) comprenant une pluralité de déflecteurs (10) élastiquement mobiles par rapport au corps conique (7), les déflecteurs (10) étant adaptés pour être déplacés sous la pression du flux d'air (l), pour faire varier la perméabilité du dispositif d'orientation (5).

4. Ensemble d'admission d'air (1) selon la revendication 3, **caractérisé en ce que** le corps conique (7) présente des fentes (12) séparant chaque déflecteur (10), les fentes (12) permettant le déplacement de chaque déflecteur (10) et permettant une variation de perméabilité du dispositif d'orientation (5).

5. Ensemble d'admission d'air (1) selon la revendication 2, **caractérisé en ce que** le dispositif d'orientation (5) comprend un corps conique (7) présentant une pluralité d'ouvertures (20) présentant des formes et des surfaces différentes.

6. Ensemble d'admission d'air (1) selon la revendication 5, **caractérisé en ce que** le corps conique (7) présente une première série d'ouvertures (20a), positionnées dans une région amont et une deuxième série d'ouvertures (20b) positionnées dans une région aval, les ouvertures (20b) de la deuxième série présentant chacune une surface supérieure à la surface de chaque ouverture (20a) de la première série.

7. Ensemble d'admission d'air (1) selon la revendication 2, **caractérisé en ce que** le dispositif d'orientation (5) comprend un diaphragme (15) de forme conique adapté pour faire varier l'ouverture aval (9).

8. Procédé de mesure du débit d'un flux d'air (l) circulant dans un ensemble d'admission d'air (1) selon l'une quelconque des revendications 1 à 7, **caractérisé en ce qu'**il comprend les étapes de :
- (a) circulation d'un flux d'air (l) présentant un débit dans le tuyau (2) ;
- (b) variation de la perméabilité du dispositif d'orientation (5) en fonction du débit du flux d'air (l) circulant dans le tuyau (2), pour régler la vitesse du flux d'air (l) et orienter le flux d'air (l) vers le débitmètre (3) ;
- (c) mesure du débit par le débitmètre (3).

9. Procédé selon la revendication 8, **caractérisé en ce que** l'étape (b) comprend une phase de maintien d'une perméabilité minimale, ou de réduction de la perméabilité, pour un débit, dit faible débit, compris entre 1g/s et 10g/s, pour concentrer le flux d'air (l) vers le débitmètre (3) et augmenter la vitesse du flux d'air (l).

10. Procédé selon la revendication 9, **caractérisé en ce que** l'étape (b) comprend une phase d'augmentation de la perméabilité pour un débit, dit haut débit, compris entre 30g/s et 250g/s, pour diminuer les pertes de charges.

## Patentansprüche

1. Lufteinlassanordnung (1) für einen Kraftfahrzeugmotor, umfassend ein Lufteinlassrohr (2), einen Durchflussmesser (3) und eine Vorrichtung zur Ausrichtung (5) eines Luftstroms, die stromaufwärts von dem Durchflussmesser (3) in Bezug auf die Umlaufrichtung des Luftstroms (l) in dem Rohr (2) positioniert ist, wobei die Vorrichtung zur Ausrichtung (5) des Luftstroms (l) angepasst ist, um den Luftstrom (l) zu dem Durchflussmesser (3) zu leiten, **dadurch gekennzeichnet, dass** die Vorrichtung zur Ausrichtung (5) des Luftstroms (l) eine variable Durchlässigkeit aufweist, um die Geschwindigkeit des Luftstroms (l) zu regeln.

2. Lufteinlassanordnung (1) nach Anspruch 1, **dadurch gekennzeichnet, dass** die Vorrichtung zur Ausrichtung (5) eine konische Form mit einer stromaufwärtigen Öffnung (8) und einer stromabwärtigen Öffnung (9) aufweist, um den Luftstrom (l) auf den Durchflussmesser (3) zu fokussieren.

3. Lufteinlassanordnung (1) nach Anspruch 2, **dadurch gekennzeichnet, dass** die Vorrichtung zur Ausrichtung (5) einen konischen Körper (7) aufweist, der eine Vielzahl von Abweisern (10) umfasst, die in Bezug auf den konischen Körper (7) elastisch beweglich sind, wobei die Abweiser (10) angepasst sind, um unter dem Druck des Luftstroms (l) bewegt zu werden, um die Durchlässigkeit der Vorrichtung zur Ausrichtung (5) variieren zu lassen.

4. Lufteinlassanordnung (1) nach Anspruch 3, **dadurch gekennzeichnet, dass** der konische Körper (7) Schlitze (12) aufweist, die jeden Abweiser (10) trennen, wobei die Schlitze (12) die Bewegung jedes Abweisers (10) ermöglichen und eine Variation der Durchlässigkeit der Vorrichtung zur Ausrichtung (5) ermöglichen.

5. Lufteinlassanordnung (1) nach Anspruch 2, **dadurch gekennzeichnet, dass** die Vorrichtung zur Ausrichtung (5) einen konischen Körper (7) umfasst, der eine Vielzahl von Öffnungen (20) aufweist, die unterschiedliche Formen und Oberflächen aufweisen.

6. Lufteinlassanordnung (1) nach Anspruch 5, **dadurch gekennzeichnet, dass** der konische Körper (7) eine erste Reihe von Öffnungen (20a) aufweist, die in einem stromaufwärtigen Bereich positioniert sind, und eine zweite Reihe von Öffnungen (20b), die in einem stromabwärtigen Bereich positioniert sind, wobei die Öffnungen (20b) der zweiten Reihe jeweils eine Oberfläche aufweisen, die höher liegt als die Oberfläche jeder Öffnung (20a) der ersten Reihe.

7. Lufteinlassanordnung (1) nach Anspruch 2, **dadurch gekennzeichnet, dass** die Vorrichtung zur Ausrichtung (5) eine Blende (15) in konischer Form umfasst, die angepasst ist, um die stromabwärtige Öffnung (9) variieren zu lassen.

8. Verfahren zum Messen des Durchflusses eines Luftstroms (l), der in einer Lufteinlassanordnung (1) nach einem der Ansprüche 1 bis 7 zirkuliert, **dadurch gekennzeichnet, dass** es folgende Schritte umfasst:
- (a) Zirkulieren eines Luftstroms (l), der einen Durchfluss aufweist, in dem Rohr (2);
- (b) Variieren der Durchlässigkeit der Vorrichtung zur Ausrichtung (5) je nach Durchfluss des Luftstroms (l), der in dem Rohr (2) zirkuliert, um die Geschwindigkeit des Luftstroms (l) zu regeln und des Luftstrom (l) zu dem Durchflussmesser (3) auszurichten;
- (c) Messen des Durchflusses mittels des Durchflussmessers (3).

9. Verfahren nach Anspruch 8, **dadurch gekennzeichnet, dass** der Schritt (b) eine Phase des Aufrechterhaltens einer minimalen Durchlässigkeit oder des Verringerns der Durchlässigkeit für einen Durchfluss, so genannten niedrigen Durchfluss, umfasst, der zwischen 1 g/s und 10 g/s beträgt, um den Luftstrom (l) zu dem Durchflussmesser (3) zu konzentrieren und die Geschwindigkeit des Luftstroms (l) zu erhöhen.

10. Verfahren nach Anspruch 9, **dadurch gekennzeichnet, dass** der Schritt (b) eine Phase des Erhöhens der Durchlässigkeit für einen Durchfluss, so genannten hohen Durchfluss, umfasst, der zwischen 30 g/s und 250 g/s beträgt, um die Druckverluste zu mindern.

## Claims

1. An air intake assembly (1) for an automotive engine, comprising an air intake pipe (2), a flow meter (3) and a device (5) for orienting an air flow which is positioned upstream of the flow meter (3) relative to the direction of circulation of the air flow (I) in the pipe (2), the device (5) for orienting the air flow (I) being adapted to guide the air flow (I) towards the flow meter (3), **characterized in that** the device (5) for orienting the air flow (I) having a variable permeability to adjust the speed of the air flow (I).

2. The air intake assembly (1) according to claim 1, **characterized in that** the orientation device (5) has a conical shape with an upstream opening (8) and a downstream opening (9), to focus the air flow (I) on the flow meter (3).

3. The air intake assembly (1) according to claim 2, **characterized in that** the orientation device (5) has a conical body (7) comprising a plurality of deflectors (10) which are elastically movable relative to the conical body (7), the deflectors (10) being adapted to be displaced under the pressure of the air flow (I), to vary the permeability of the orientation device (5).

4. The air intake assembly (1) according to claim 3, **characterized in that** the conical body (7) has slots (12) separating each deflector (10), the slots (12) allowing the displacement of each deflector (10) and allowing a variation in permeability of the orientation device (5).

5. The air intake assembly (1) according to claim 2, **characterized in that** the orientation device (5) comprises a conical body (7) having a plurality of openings (20) having different shapes and areas.

6. The air intake assembly (1) according to claim 5, **characterized in that** the conical body (7) has a first series of openings (20a), which are positioned in an upstream region, and a second series of openings (20b), which are positioned in a downstream region, the openings (20b) of the second series each having an area which is greater than the area of each opening (20a) of the first series.

7. The air intake assembly (1) according to claim 2, **characterized in that** the orientation device (5) comprises a conically shaped diaphragm (15) which is adapted to vary the downstream opening (9).

8. A method for measuring the flow rate of an air flow (I) circulating in an air intake assembly (1) according to any one of claims 1 to 7, **characterized in that** it comprises the steps of:
- (a) circulating an air flow (I) having a flow rate in the pipe (2);
- (b) varying the permeability of the orientation device (5) depending on the flow rate of the air flow (I) circulating in the pipe (2), to adjust the speed of the air flow (I) and orient the air flow (I) towards the flow meter (3);
- (c) measuring the flow rate by the flow meter (3).

9. The method according to claim 8, **characterized in that** step (b) comprises a phase of maintaining a minimum permeability, or reducing the permeability, for a flow rate, called low flow rate, comprised between 1g/s and 10g/s, to concentrate the air flow (I) towards the flow meter (3) and increase the speed of the air flow (I).

10. The method according to claim 9, **characterized in that** step (b) comprises a phase of increasing the permeability for a flow rate, called high flow rate, comprised between 30g/s and 250g/s, to decrease the pressure drops.
